# EUROPEAN PATENT SPECIFICATION

(11) **EP 1 020 715 B1**
(45) Date of publication and mention of the grant of the patent: **02.08.2006**
(21) Application number: 99830782.1
(22) Date of filing: 17.12.1999
(51) Int. Cl.: G01F 23/24

(54) **Improvement in spot probes, particularly probes to reveal presence of water.**
Verbesserung in Messpunktsonde, insbesondere Messsonde zum Nachweis der Anwesenheit von Wasser
Amélioration aus sondes de mesure à point, en particulier sondes pour révéler la présence d'eau

(30) Priority: 15.01.1999 IT RM000005 U
(43) Date of publication of application: 19.07.2000
(73) Proprietor: Compagnia Generale Sicurezza s.r.l., 00142 Roma (IT)
(72) Inventor: Scorzelli, Gianfranco, 00142 Roma (IT)
(74) Representative: Iannone, Carlo Luigi

(56) References cited:
- EP-A- 0 173 067
- DE-A- 3 713 031
- DE-A- 3 713 032
- US-A- 4 227 190
- US-A- 4 728 924
- US-A- 5 655 561
- PATENT ABSTRACTS OF JAPAN vol. 012, no. 226 (P-722), 28 June 1988 (1988-06-28) & JP 63 019528 A (HITACHI LTD;OTHERS: 01), 27 January 1988 (1988-01-27)

## Description

The present invention relates to an improvement in spot probes, particularly probes to reveal presence of water.

More particularly, the invention concerns a new structure of the above kind of probes, which allows to obtain a better usability and reliability of the same.

As it is well known, while realising system to indicate water leakings, linear or spot probes are employed, thus realising a signalling network that will be suitably designed in function of the specific needings.

Various systems can be more or less sophisticated, employing more or less sophisticated electronics.

Particularly, continuous strip probes are used to obtain a distributed surveillance, while spot probes are used to protect a particular object or particular points of an environment.

At present, spot probes are designed in such a way that their mounting must be realised on a wall (i.e. along a vertical direction with respect to the surface to be monitored) and generally provide the use of cylindrical or parallelepiped electrodes.

Obviously, this kind of solution involves some problems, particularly for the mounting on the floor, so that a suitable additional bracket must be used to be able to obtain the proper positioning of the electrodes with respect to the surface to be controlled.

Furthermore, with the cylindrical electrodes and the probe mounted on the wall it is not possible to carry out an adjustment of the position of the electrodes with respect to the surface to be checked, without intervening on the fixing elements of probe on the wall, with the risk that the presence of water is not revealed.

DE3713031 discloses an arrangement for monitoring water in which a plurality of water sensors are distributed across the floor of a room. Each sensor comprises a plastic housing with a bottom plate through which sensor electrodes project and which have the form of flat metal discs parallel to the bottom plate and supported at a small distance from the floor surface by means of a central protrusion. Cable connectors are lead out of the housing which can be fixed by screws to the floor.

In this situation, the Applicant has realised a new spot probe allowing to solve the above mentioned problems.

Particularly, the solution according to the invention allows to obtain the mounting of the probe both on the wall and on the floor in a simple way without the needing of providing mounting brackets.

Furthermore, for the wall mounting, the solution according to the invention allows to carry out a very simple micrometric adjustment of the electrode position.

It is therefore specific object of the present invention spot probe, particularly probes to reveal presence of water, comprising a watertight container, provided with means for its fixing on a surface, and two substantially flat - shaped electrodes which project from the container in the plane of the electrodes.

Preferably, according to the invention, said two electrodes can be realised by stainless steel.

Always according to the invention, said electrodes are comprised of two metallic laminae, preferably substantially rigid laminae.

Furthermore, according to the invention, said container is comprised of thermoplastic material, sealed on the back by epoxy resin, in such a way to be able to operate within the water.

Still according to the invention, said fixing means can be comprised of elongated slots.

The present invention will be now described, for illustrative but not limitative purposes, according to its preferred embodiments, with particular reference to the figures of the enclosed drawings, wherein:

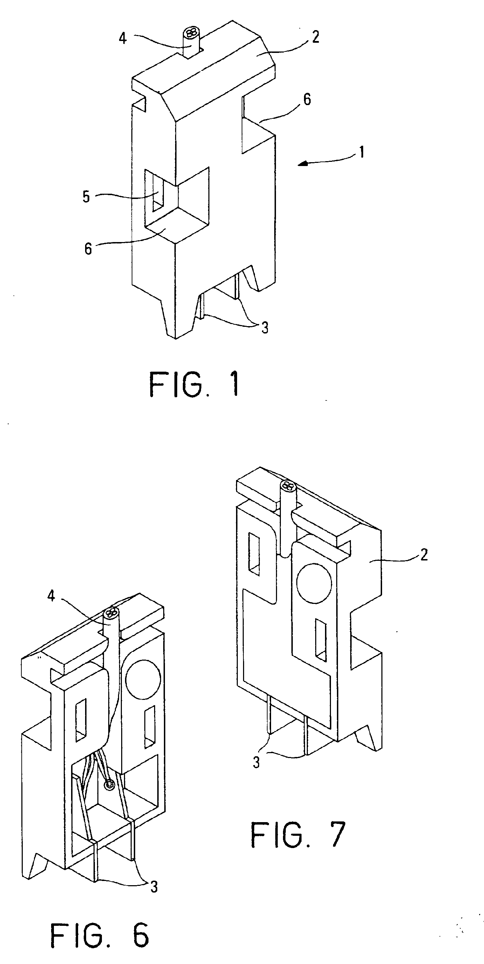

figure 1 is a perspective view of a probe according to the present invention;

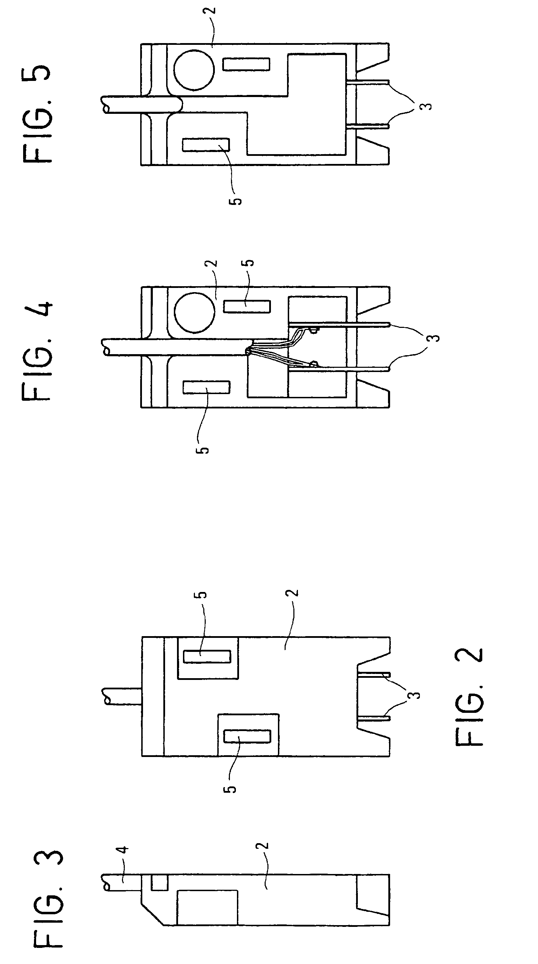

figure 2 is a front view of the probe of figure 1;
figure 3 is a lateral view of the probe of figure 1;
figure 4 is a rear view of the probe of figure 1 before the application of the resin;
figure 5 is a rear view of the probe of figure 1 after the application of the resin;
figure 6 is a perspective rear view of the probe of figure 1 before the application of the resin; and
figure 7 is a perspective rear view of the probe of figure 1 after the application of the resin.

Referring to all the figures of the enclosed drawings, a probe 1 according to the invention is shown, providing a watertight container 2 that can be comprised of thermoplastic material or of any other suitable material.

In the enclosed figures, container 2 is shown having a parallelepiped shape, but it can obviously be realised with a different shape.

Two electrodes 3, comprised of two stainless steel rigid laminae, and an electric cable for the connection with the electronic unit (not shown and not described since it is not a part of the invention) come out from said container 2.

Two slots 5 are obtained on the container 2 to fix the probe 1 on the floor or on the wall, provided within notches 6 realised in the same container 6.

On the back, said container is opened to introduce the electrodes 3 and the cable 4. Electrodes 3 must be introduced within suitable guides realised on the bottom of the container 2, and suitable abutments guarantee their precise positioning.

After the positioning of the electrodes and of the cable, a resinification step is carried out using epoxy resin, thus sealing the whole object.

In an embodiment, the probe 1 according to the invention can have the following dimensions:
container 2: 30 x 62 x 13 mm
cable 4: diameter 4 mm (standard length: 1 m)

While mounting on the wall, simply folding the two electrodes 3 by pliers or other suitable tool, it is possible to carry out a micrometric adjustment of the position of the electrodes with respect to the surface on which the presence of the water must be revealed.

Using different drive electronics, the probe can be used to indicate both the presence and the absence of the water.

In the first case, applying a drive electronic, feeding the probe by direct current, the intrinsic resistance between the two electrodes 3 can be varied in function of the water presence and is a branch of a tension divider the characteristic point of which can be connected with the inlets of two operational amplifiers that, under normal conditions, operate according to a contraposition mode.

Variation of the resistance value between the two electrodes 3, once passed, by a higher or lower value, a pre-established threshold value, induces the changing of the functionality mode of the operational amplifiers, the outlet signals of which can drive by suitable drivers both relays and alarm and failure electronics.

Connection of the probe 1 with the electronic interface (not shown), generally provided on the wall in a suitable position, must be realised by the cable 4 (standard length 1 m) coming out from the upper part of the probe 1.

A plurality of probes can be parallel connected on the same electronic unit: maximum number of probes 1 that can be connected is only limited by the fact that, in case of alarm, being many probes 1 connected to the same electronic, time for identifying the point where the water leakage occurs would be too much long.

Continuity of the connection with the electronic unit is controlled by an end resistance of 15 Kohm closing the line. If required, said resistance can be introduced within the same probe.

After an alarm, once terminated the presence of water, probe 1 can be again used without any intervention.

In case probe 1 remains within the water with the electronic unit activated (alarm mode of the probe), after about 200 hours of operation in these conditions, electrodes must be cleaned to eliminate possible deposits.

Further, drive electronics feeding the probe(s) by alternate current exist, so that the probe can permanently remain within the water without requiring any cleaning of the electrodes. As a consequence of this feature, probe can be used also for applications where it is required the signaling of lack of water.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Spot probe (1), particularly probes to reveal presence of water; comprising a watertight container (2), provided with means (5) for its fixing on a surface, and two substantially flat - shaped electrodes (3) which project from the container in the plane of the electrodes.

2. Spot probe according to claim 1, **characterised in that** said two electrodes are realised by stainless steel.

3. Spot probe according to one of the preceding claims, **characterised in that** said electrodes are comprised of two metallic laminae, preferably substantially rigid laminae.

4. Spot probe according to one of the preceding claims, **characterised in that** said container is comprised of thermoplastic material, sealed on the back by epoxy resin, in such a way to be able to operate within the water.

5. Spot probe according to one of the preceding claims, **characterised in that** said fixing means (5) are comprised of elongated slots.

6. Spot probe according to one of the preceding claims, **characterised in that** said container (2) has the shape of a parallelepiped.

7. Spot probe according to one of the preceding claims, **characterised in that** the electrodes (3) must be introduced within suitable guides realised on the bottom of the container (2), and their precise positioning is guaranteed by suitable abutments.

## Patentansprüche

1. Messpunktsonde (1), insbesondere Messsonde zum Nachweis der Anwesenheit von Wasser, umfassend ein wasserdichtes Gehäuse (2), versehen mit Mitteln (5) für ihre Befestigung auf einer Oberfläche und zwei im wesentlichen flachgeformte Elektroden (3), welche vom Gehäuse in die Ebene der Elektroden hervorstehen.

2. Vorrichtung gemäß Anspruch 1, **dadurch gekennzeichnet, dass** diese zwei Elektroden aus Edelstahl gestaltet sind.

3. Vorrichtung gemäß einem der vorhergehenden Ansprüche, **dadurch gekennzeichnet, dass** diese Elektroden zwei metallische Schichten, vorzugsweise im Wesentlichen starre Schichten umfassen.

4. Vorrichtung gemäß einem der vorhergehenden Ansprüche, **dadurch gekennzeichnet, dass** dieses Gehäuse zwei thermoplastische Materialien umfasst, die an der Rückseite mit Epoxydharz derart versiegelt sind, um innerhalb des Wassers betrieben werden zu können.

5. Vorrichtung gemäß einem der vorhergehenden Ansprüche, **dadurch gekennzeichnet, dass** diese Befestigungsmittel (5) Schlitzlöcher umfassen.

6. Vorrichtung gemäß einem der vorhergehenden Ansprüche, **dadurch gekennzeichnet, dass** dieses Gehäuse (2) die Form eines Parallelepipedes hat.

7. Vorrichtung gemäß einem der vorhergehenden Ansprüche, **dadurch gekennzeichnet, dass** die Elektroden (3) mit geeignet gestalteten Führungen am Boden des Gehäuses (2) eingesetzt sein müssen und deren präzise Positionierung durch geeignete Widerlager garantiert ist.

## Revendications

1. Sonde (1) de mesure à point, particulièrement des sondes servant à révéler une présence d'eau ; comprenant un conteneur étanche à l'eau (2), pourvu de moyens (5) en permettant la fixation sur une surface et de deux électrodes de forme sensiblement plate (3) qui font saillie du conteneur dans le plan des électrodes.

2. Sonde de mesure à point selon la revendication 1, **caractérisée en ce que** lesdites deux électrodes sont réalisées en acier inoxydable.

3. Sonde de mesure à point selon l'une des revendications précédentes, **caractérisée en ce que** lesdites électrodes sont constituées de deux lamelles métalliques, de préférence de lamelles sensiblement rigides.

4. Sonde de mesure à point selon l'une des revendications précédentes, **caractérisée en ce que** ledit conteneur est constitué d'un matériau thermoplastique, scellé hermétiquement sur l'arrière par de la résine époxy, de façon à pouvoir fonctionner dans l'eau.

5. Sonde de mesure à point selon l'une des revendications précédentes, **caractérisée en ce que** lesdits moyens (5) de fixation sont constituée de fentes allongées.

6. Sonde de mesure à point selon l'une des revendications précédentes, **caractérisée en ce que** ledit conteneur (2) a la forme d'un parallélépipède.

7. Sonde de mesure à point selon l'une des revendications précédentes, **caractérisée en ce que** les électrodes (3) doivent être introduites à l'intérieur de guides appropriés réalisés sur la partie inférieure du conteneur (2), et **en ce que** leur positionnement précis est garanti par des butées appropriées.
